Europäisches Patentamt

European Patent Office

Office européen des brevets

(19)

(11) Veröffentlichungsnummer: **0 124 747**

**A2**

(12) **EUROPÄISCHE PATENTANMELDUNG**

(21) Anmeldenummer: **84103358.2**

(22) Anmeldetag: **27.03.84**

(51) Int. Cl.³: **B 01 D 9/00**

(30) Priorität: **11.05.83 DE 3317537**

(43) Veröffentlichungstag der Anmeldung:
**14.11.84 Patentblatt 84/46**

(84) Benannte Vertragsstaaten:
**BE CH DE FR GB IT LI LU NL SE**

(71) Anmelder: **SCHERING AKTIENGESELLSCHAFT Berlin und Bergkamen**
**Müllerstrasse 170/178 Postfach 65 03 11**
**D-1000 Berlin 65(DE)**

(72) Erfinder: **Otto, Wilfried, Dr.**
**Leinder Strasse 10**
**D-3340 Wolfenbüttel(DE)**

(72) Erfinder: **Papendieck, Hatto**
**Elmwarteweg 19**
**D-3305 Erkerode(DE)**

(72) Erfinder: **Konradt, Harald**
**Vor den Rotten 18**
**D-3340 Wolfenbüttel(DE)**

(72) Erfinder: **Röder, Claus-Henning, Dr.**
**Alter Rautheimer Weg 54**
**D-3300 Braunschweig(DE)**

(54) **Kristallisations-Trennvorrichtung und Verfahren zur Trennung von Stoffgemischen.**

(57) Die Erfindung betrifft eine Kristallisations- Trennvorrichtung für Stoffgemische mit vertikaler Kristallisationskolonne, Kühlund Heizaggregate, Einspeise- und Abnahmestutzen, Pumpen, Ventilen, verbindenden Rohrleitungen und Antriebsmotor, die dadurch gekennzeichnet ist, daß die Kristallisationskolonne aus einem zylindrischem Rohr besteht, in dem drehbar an einer zentralen Achse rechteckige Flügel angeordnet sind, die das Rohr in segmentförmige Kammern von jeweils gleicher Größe aufteilen, sowie ein Verfahren zur Trennung von Stoffgemischen.

EP 0 124 747 A2

Croydon Printing Company Ltd.

SCHERING AG
Gewerblicher Rechtsschutz
0124747

Die Erfindung betrifft eine Kristallisations-Trennvorrichtung für Stoffgemische mit vertikaler Kristallisationskolonne, Kühl- und Heizaggregaten, Einspeise- und Abnahmestutzen, Pumpen, Ventilen, verbindenden Rohrleitungen und Antriebsmotor sowie ein Verfahren zur Trennung von Stoffgemischen.

Die Trennung von Stoffgemischen erfolgt in der Regel durch Destillieren, Extrahieren oder Kristallisieren. Diese Trenn- oder Reinigungsverfahren sind an sich bekannt und haben einen vielfältigen Anwendungsbereich. Allerdings ist für viele Stoffgemische der Trennungs- oder Reinigungsprozess außerordentlich aufwendig und oftmals unbefriedigend.

So ist ein Verfahren zur Trennung schmelzflüssiger, flüssiger oder gelöster Stoffe aus Stoffgemischen durch ein- oder mehrstufiges fraktioniertes Kristallisieren entlang einer Wandung bekannt geworden, wobei man den Ausgangsstoff in Form eines während des Verfahrens flüssig bleibenden Flüssigkeitsfilms aufgibt (CH-PS 501 421).

Die Stofftrennung wird bei diesem praxisbekannten Verfahren in diskontinuierlicher Arbeitsweise ohne Verwendung von mechanischen Hilfsmitteln durchgeführt. Die Kristallisation erfolgt hierbei an Wänden aus der als Rieselfilm aufgegebenen flüssigen Phase, was voraussetzt, daß das Kristallisat auf den Wänden gut haften muß, da nur dann eine Trennung von Kristallisat und Mutterlauge erfolgen kann. Da diese Haftung aber nicht immer gegeben ist, ist der Anwendungsbereich dieses Verfahrens begrenzt.

Vorstand: Dr. Herbert Asmis · Dr Christian Bruhn · Hans-Jürgen Hamann
Dr. Heinz Hannse   Karl Otto Mittelstenscheid · Dr. Horst Witzel
Vorsitzender des Aufsichtsrats  Dr. Eduard v. Schwartzkoppen
Sitz der Gesellschaft  Berlin und Bergkamen
Handelsregister  AG Charlottenburg 93 HRB 283 u. AG Kamen HRB 0061

Postanschrift· SCHERING AG · D-1000 Berlin 65 · Postfach 65 03 11
Postscheck-Konto  Berlin-West 1175-101, Bankleitzahl 100 100 10
Berliner Commerzbank AG, Berlin, Konto-Nr  108 7006 00  Bankleitzahl 100 400 (
Berliner Disconto-Bank AG, Berlin, Konto-Nr  241/5008, Bankleitzahl 100 700 00
Berliner Handels-Gesellschaft — Frankfurter Bank —, Berlin,
Konto-Nr. 14-362, Bankleitzahl 100 202 00

Formular-Nr.: 1489-8

Die Erfindung hat die Aufgabe, eine Vorrichtung zu schaffen, mit der **aus einem Stoffgemisch eine Komponente in hoher Reinheit zu gewinnen ist.**

Diese Aufgabe wird durch eine Vorrichtung der eingangs bezeichneten Art gelöst, die dadurch gekennzeichnet ist, daß die Kristallisationskolonne aus einem zylindrischem Rohr besteht, in dem drehbar an einer zentralen Achse rechteckige Flügel angeordnet sind, die das Rohr in segmentförmige Kammern von jeweils gleicher Größe aufteilen.

Vorteilhafte Weiterbildungen der Erfindung bestehen darin,

a) daß das Rohr durch die Drehflügel in drei bis zwanzig Kammern, vorzugsweise 4 Kammern aufgeteilt wird,

b) daß die Flügel eine glatte Oberfläche aufweisen,

c) daß die Flügel mittels Federn in ebener Auflage fest an die Rohroberfläche gepresst werden,

d) daß die Flügel die Länge des Rohres aufweisen,

e) daß die Flügel an ihrer zur Rohrwand gerichteten Fläche spitzwinklig gestaltet sind,

f) daß das Verhältnis von Durchmesser zu Länge des Rohres von 1 : 1 bis 1 : 25, vorzugsweise 1 : 10, ist,

g) daß sich am oberen Teil des Rohres Kühlschlangen und am unteren Teil des Rohres Heizschlangen befinden,

Formular-Nr.: 1439-8

Vorstand: Dr. Herbert Asmis · Dr. Christian Bruhn · Hans-Jürgen Hamann
Dr. Heinz Hannse · Karl Otto Mittelstenscheid · Dr. Horst Witzel
Vorsitzender des Aufsichtsrats: Dr. Eduard v. Schwartzkoppen
Sitz der Gesellschaft: Berlin und Bergkamen
Handelsregister: AG Charlottenburg 93 HRB 283 u. AG Kamen HRB 0061

Postanschrift: SCHERING AG · D-1000 Berlin 65 · Postfach 65 03 11
Postscheck-Konto: Berlin-West 1175-101, Bankleitzahl 100 100 10
Berliner Commerzbank AG, Berlin, Konto-Nr. 108 7006 00, Bankleitzahl 10
Berliner Disconto-Bank AG, Berlin, Konto-Nr. 241/5008, Bankleitzahl 100 ?
Berliner Handels-Gesellschaft — Frankfurter Bank —, Berlin,
Konto-Nr. 14-362, Bankleitzahl 100 202 00

SC3 GC

SCHERING AG
Gewerblicher Rechtsschutz
0124747

h) daß das Rohr aus korrosionsfestem Material, vorzugsweise Stahl, besteht,

i) daß das Rohr am oberen und am unteren Ende mit Abdeckplatten versehen ist,

j) daß zwischen dem unteren Ende des Rohres und der unteren Abdeckplatte ein Glasring eingesetzt ist,

k) daß das am unteren Teil des Rohres befindliche Heizaggregat Leitbleche enthält, die stehend auf der Heizfläche angebracht sind,

l) daß die Kühl- und Heizaggregate mit einer Wärmepumpe verbunden sind,

m) daß der Einspeisestutzen im mittleren Teil des Rohres und die Abnahmestutzen jeweils im unteren Teil und im oberen Teil des Rohres angebracht sind,

n) daß über die Gesamtlänge des Rohres Temperaturmeßstellen verteilt sind.

Gegenstand der Erfindung ist weiterhin ein Verfahren zur Trennung von Stoffgemischen unter Verwendung der erfindungsgemäßen Kristallisations-Trennvorrichtung, das dadurch gekenn-

Formular-Nr.: 1489-8

Vorstand: Dr. Herbert Asmis · Dr. Christian Bruhn · Hans-Jürgen Hamann
Dr. Heinz Hannse · Karl Otto Mittelstenscheid · Dr. Horst Witzel
Vorsitzender des Aufsichtsrats: Dr. Eduard v. Schwartzkoppen
Sitz der Gesellschaft: Berlin und Bergkamen
Handelsregister: AG Charlottenburg 93 HRB 283 u. AG Kamen HRB 0061

Postanschrift: SCHERING AG · D-1000 Berlin 65 · Postfach 65 03 11
Postscheck-Konto: Berlin-West 1175-101, Bankleitzahl 100 100 10
Berliner Commerzbank AG, Berlin, Konto-Nr. 108 7006 00, Bankleitzahl 100 400 00
Berliner Disconto-Bank AG, Berlin, Konto-Nr. 241/5008, Bankleitzahl 100 700 00
Berliner Handels-Gesellschaft — Frankfurter Bank —, Berlin,
Konto-Nr. 14-362, Bankleitzahl 100 202 00

SC3 GC IV 4255C

SCHERING AG
Gewerblicher Rechtsschutz
0124747

zeichnet ist, daß das Stoffgemisch als Schmelze unter konstanter Rotation der Drehflügel in den mittleren Teil der Kolonne eingespeist wird, worauf die am gekühlten oberen Teil der Kolonne abgeschiedenen Kristalle mittels der rotierenden Drehflügel von der Kolonnenwand entfernt und in den von den Flügeln gebildeten Kammern solange im Gegenstromprinzip gegen das aus dem beheizten unteren Teil der Kolonne entgegenströmende flüssige Stoffgemisch geweitet werden, bis sich das Stoffgemisch durch Sedimentierung des Stoffs mit höherer Dichte in seine Komponenten - Reinstoff und entsprechende Mutterlauge - getrennt hat, die dann jeweils am unteren oder oberen Ende der Kolonne entnommen werden.
Besondere Ausführungsformen dieses Verfahrens bestehen darin,

p) daß der obere Teil der Kolonne auf eine Temperatur dicht unterhalb des Schmelzpunktes desjenigen Stoffes im Stoffgemisch eingestellt wird, der eine gegenüber dem begleitenden Stoff oder Stoffgemisch höhere Dichte aufweist,

q) daß der untere Teil der Kolonne auf eine Temperatur oberhalb des Schmelzpunktes des Stoffes mit der höheren Dichte eingestellt wird,

r) daß die Kristalle auf ihrem Weg vom oberen zum unteren Teil der Kolonne eine Bahn durchlaufen, die der Kurve einer Hypocykloide entspricht,

s) daß das Verfahren kontinuierlich durchgeführt wird und

t) daß, sofern es sich um die Trennung von Drei- oder Mehrstoffmischungen handelt, die Behandlung in nachgeschalteten analogen Vorrichtungen wiederholt wird.

Vorstand: Dr. Herbert Asmis · Dr. Christian Bruhn · Hans-Jürgen Hamann
Dr. Heinz Hannse · Karl Otto Mittelstenscheid · Dr. Horst Witzel
Vorsitzender des Aufsichtsrats: Dr. Eduard v. Schwartzkoppen
Sitz der Gesellschaft: Berlin und Bergkamen
Handelsregister: AG Charlottenburg 93 HRB 283 u AG Kamen HRB 0061

Postanschrift: SCHERING AG · D-1000 Berlin 65 · Postfach 65 03 11
Postscheck-Konto: Berlin-West 1175-101, Bankleitzahl 100 100 10
Berliner Commerzbank AG, Berlin, Konto-Nr. 108 7006 00, Bankleitzahl 100 4
Berliner Disconto-Bank AG, Berlin, Konto-Nr. 241/5008, Bankleitzahl 100 700
Berliner Handels-Gesellschaft — Frankfurter Bank —, Berlin,
Konto-Nr. 14-362, Bankleitzahl 100 202 00

Die erfindungsgemäße Vorrichtung sowie das gekennzeichnete Verfahren ermöglichen in vorteilhafter Weise die Gewinnung einer Komponente aus einem Stoffgemisch in hoher Reinheit.

Die erfindungsgemäße Vorrichtung gewährleistet überraschenderweise die Trennung aller Stoffgemische, bei denen die feste Phase eines Stoffs eine höhere Dichte als seine Schmelze hat.

Die Vorrichtung und das Verfahren bieten sich daher an für die Mehrstoffsysteme, bei denen die bekannten Verfahren, wie Destillation, Extraktion und Kristallisation aus Lösungen, große technische Probleme aufwerfen, und bei Prozessen, bei denen höchste Produktreinheit gefordert wird.

Von besonderer technischer Bedeutung ist es, daß sich nicht nur eutektikumbildende Gemische trennen lassen, sondern auch Mischkristallsysteme.

Als weitere Vorteile sind außerdem der geringe Energieaufwand und das insgesamt niedrige Prozesstemperaturniveau zu nennen, womit Probleme chemischer Stabilität und außerdem Probleme mit dem Betrieb der Anlage in explosionsgefährdeten Betriebsstätten von vornherein vermieden werden.

Störgrößen, wie Diffusion und Dendritenbildung, sind weitestgehend ohne Einfluß, da die erfindungsgemäße Vorrichtung außerordentlich kurze Kristallisationszeiten ermöglicht, wodurch die Konzentration der Verunreinigungen vor der Kristallisationsfront kleingehalten wird. Diese kurzen Kristallbildungszeiten begründen die außerordentlich hohen Reinheitsgrade von mindestens 99,97 %, die mit der Vorrichtung erzielt werden können.

Formular-Nr.: 1489-8

Vorstand: Dr. Herbert Asmis · Dr. Christian Bruhn · Hans-Jürgen Hamann
Dr. Heinz Hannse · Karl Otto Mittelstenscheid · Dr. Horst Witzel
Vorsitzender des Aufsichtsrats: Dr. Eduard v. Schwartzkoppen
Sitz der Gesellschaft: Berlin und Bergkamen
Handelsregister: AG Charlottenburg 93 HRB 283 u. AG Kamen HRB 0061

Postanschrift: SCHERING AG · D-1000 Berlin 65 · Postfach 65 03 11
Postscheck-Konto: Berlin-West 1175-101, Bankleitzahl 100 100 10
Berliner Commerzbank AG, Berlin, Konto-Nr. 108 7006 00, Bankleitzahl 100 400 00
Berliner Disconto-Bank AG, Berlin, Konto-Nr. 241/5008, Bankleitzahl 100 700 00
Berliner Handels-Gesellschaft — Frankfurter Bank —, Berlin,
Konto-Nr. 14-362, Bankleitzahl 100 202 00

SC3 GC IV 42550

Der mechanische Aufbau der erfindungsgemäßen Vorrichtung ist in technisch einfacher Weise gelöst.

In dem vertikal montierten zylindrischem Rohr sind über die gesamte Länge wirksame Flügel an einer zentralen Achse angeordnet, die wie Schabeelemente wirken. Die Drehflügel teilen das Rohr in Kammern, deren Zahl zwei oder mehr betragen kann.
In den durch die Flügel gebildeten Kammern wird das flüssige Stoffgemisch beziehungsweise die Suspension infolge der Rotation der Flügel zu einer Rotation um die Hochachse veranlaßt, wodurch ständig frische Lösung aus dem Inneren der Flüssigkeit an die Kristallfront gefördert wird und gleichzeitig damit die gebildeten Kristalle abgeschabt und wegtransportiert werden.
Die Bahn eines Kristalles in dieser rotierenden Walze entspricht der Kurve einer Hypozykloide. Aufgrund ihrer höheren Dichte sinken die Kristalle aus der Kühlzone ab und bauen im unteren Teil der Kolonne eine Schüttschicht auf, die das entsprechende Flüssigkeitsvolumen verdrängt, das den Kristallen entgegen nach oben strömt.

Da die Schabeelemente keine Wirbel verursachen, wird weitgehend eine axiale Durchmischung verhindert.
Die Schmelze, die durch die Bodenheizung aus sedimentierten Kristallen ständig neu gebildet wird, strömt von unten durch das lockere Kristallisat und wäscht im Gegenstromprinzip die an den herabsinkenden Kristallen haftende Mutterlauge ab.

Dieser Vorgang wird bis zur endgültigen Trennung mehrfach durchlaufen, wobei sich das Rücklaufverhältnis gewünschtenfalls durch die Menge an zugeführter Wärme und die Entnahmemenge beliebig variieren läßt. Zweckmäßigerweise wird hierfür ein Bereich zwischen 1 und 10 gewählt.

Formular-Nr.: 1439-8

Vorstand: Dr. Herbert Asmis · Dr. Christian Bruhn · Hans-Jürgen Hamann
Dr. Heinz Hannse · Karl Otto Mittelstenscheid · Dr. Horst Witzel
Vorsitzender des Aufsichtsrats: Dr. Eduard v. Schwartzkoppen
Sitz der Gesellschaft: Berlin und Bergkamen
Handelsregister: AG Charlottenburg 93 HRB 283 u. AG Kamen HRB 0061

Postanschrift: SCHERING AG · D-1000 Berlin 65 · Postfach 65 03 11
Postscheck-Konto: Berlin-West 1175-101, Bankleitzahl 100 100 10
Berliner Commerzbank AG, Berlin, Konto-Nr. 108 7006 00, Bankleitzahl 100 400 00
Berliner Disconto-Bank AG, Berlin, Konto-Nr. 241/5008, Bankleitzahl 100 700 00
Berliner Handels-Gesellschaft — Frankfurter Bank —, Berlin,
Konto-Nr. 14-362, Bankleitzahl 100 202 00

SC3 GC IV 4255/

Der Verfahrensablauf ist grundsätzlich wie folgt.

In der instationären Anfahrphase wird die Kolonne mittels einer Pumpe, die parallel zur Dosierpumpe installiert ist, über den unteren Einspeisestutzen mit dem verflüssigten Stoffgemisch soweit gefüllt, bis die flüssige Schmelze aus dem oberen Abnahmestutzen ausfließt. Dann wird der Motor eingeschaltet, der über das Regelgetriebe die Drehflügel gleichmäßig antreibt, wobei es von Bedeutung ist, daß die Drehzahl niedrig gehalten wird. Außerdem wird die Kühleinrichtung zum Betrieb der Kühlschlangen eingeschaltet und auf die entsprechenden Temperaturen gebracht, die an den Temperaturmeßstellen kontrolliert werden können.

Nach kurzer Zeit beginnt im oberen Teil die Kristallisation an der Innenwand, worauf der Schaber die sich bildende Kruste ständig von der Wand abnimmt. Die abgeschabten Kristalle sinken aufgrund ihrer höheren Dichte gleichmäßig in der rotierenden Kammer nach unten, wo sie im unteren Teil der Kolonne ein Schüttbett aufbauen, das sich durch den Glasring gut beobachten läßt. Sobald sich ein genügend großes Schüttbett aufgebaut hat, das sich je nach verwendetem Stoffgemisch bis zur Mitte der Kolonne erstrecken kann, werden die Heizeinrichtungen zum Betrieb der Heizschlangen und der unten Bodenplatte eingeschaltet, wodurch ein Abschmelzen der Kristalle verursacht wird. Unter ihrem eigenen Gewicht wandert die Schüttschicht ständig in die Schmelzzone nach und verdrängt so die frisch gebildete Schmelze. Die Schmelze ihrerseits verdrängt nun die Flüssigkeit, die vorher an den Kristallen haftete und entweicht durch das Schüttbett nach oben und wäscht hierbei im Gegenstromprinzip die an den herabsinkenden Kristallen anhaftende Mutterlauge ab.

Formular-Nr.: 1489-8

Vorstand: Dr. Herbert Asmis · Dr. Christian Bruhn · Hans-Jürgen Hamann
Dr. Heinz Hannse · Karl Otto Mittelstenscheid · Dr. Horst Witzel
Vorsitzender des Aufsichtsrats: Dr. Eduard v. Schwartzkoppen
Sitz der Gesellschaft: Berlin und Bergkamen
Handelsregister: AG Charlottenburg 93 HRB 283 u. AG Kamen HRB 0061

Postanschrift: SCHERING AG · D-1000 Berlin 65 · Postfach 65 03 11
Postscheck-Konto: Berlin-West 1175-101, Bankleitzahl 100 100 10
Berliner Commerzbank AG, Berlin, Konto-Nr. 108 7006 00, Bankleitzahl 100 400 0
Berliner Disconto-Bank AG, Berlin, Konto-Nr. 241/5008, Bankleitzahl 100 700 00
Berliner Handels-Gesellschaft — Frankfurter Bank —, Berlin,
Konto-Nr. 14-362, Bankleitzahl 100 202 00

SC3 GC IV 425

SCHERING AG
Gewerblicher Rechtsschutz

0124747

Je nach Anlagengröße und zu trennendem Stoffgemisch benötigt die Anlage einige Stunden, bis die gewünschte Trennung des Gemisches eingetreten ist, erkennbar am Konzentrationsgradienten, der sich anhand der Temperaturanzeigen an den Meßstellen verfolgen läßt. Bei einem diskontinuierlichen Betrieb können nun die Komponenten am oberen beziehungsweise am unteren Abnahmestutzen entnommen werden, wobei natürlich darauf geachtet werden muß, daß keine Durchmischung erfolgt.

Sofern jedoch ein kontinuierlicher Betrieb gewünscht wird, werden nach Aufbau der Konzentrationsgradienten die Dosierpumpen eingeschaltet, welche jeweils weiteres verflüssigtes Stoffgemisch in den mittleren Kolonnenteil einspeisen beziehungsweise die Entnahme des reinen Stoffes am unteren und/oder am oberen Kolonnenteil über die dort angebrachten Stutzen besorgen. Ein solcher Betrieb ist praktisch unbegrenzt durchführbar.

Da die erfindungsgemäße Vorrichtung naturgemäß auf die Trennung von zwei Komponenten abgestellt ist, können im Falle der Trennung vo Drei- oder Mehrstoffgemischen weitere analoge Vorrichtungen nachgeschaltet werden, in die man das bei der ersten Trennung noch nicht aufgetrennt Gemisch einer weiteren Trennung unterwirft.

Als Stoffgemische, die erfindungsgemäß getrennt beziehungsweise gereinigt werden können, seien beispielsweise folgende genannt:

Faservorprodukte, wie p-Xylol, Adipinsäure, pharmazeutische Wirkstoffe und Pflanzenschutzmittel, Naturstoffe, Grundchemikalien, Isomere, wie chlorierte oder nitrierte Aromaten, Phenolderivate, wie p-Kresol.

- 9 -

Formular-Nr.: 1499-8

Vorstand: Dr. Herbert Asmis · Dr. Christian Bruhn · Hans-Jürgen Hamann
Dr. Heinz Hannse · Karl Otto Mittelstenscheid · Dr. Horst Witzel
Vorsitzender des Aufsichtsrats: Dr. Eduard v. Schwartzkoppen
Sitz der Gesellschaft: Berlin und Bergkamen
Handelsregister: AG Charlottenburg 93 HRB 283 u. AG Kamen HRB 0061

Postanschrift: SCHERING AG · D-1000 Berlin 65 · Postfach 65 03 11
Postscheck-Konto: Berlin-West 1175-101, Bankleitzahl 100 100 10
Berliner Commerzbank AG, Berlin, Konto-Nr. 108 7005 00, Bankleitzahl 100 400
Berliner Disconto-Bank AG, Berlin, Konto-Nr. 241/5008, Bankleitzahl 100 700 0
Berliner Handels-Gesellschaft — Frankfurter Bank —, Berlin,
Konto-Nr. 14-362, Bankleitzahl 100 202 00

SC3 GC IV 4

SCHERING AG
Gewerblicher Rechtsschutz
0124747

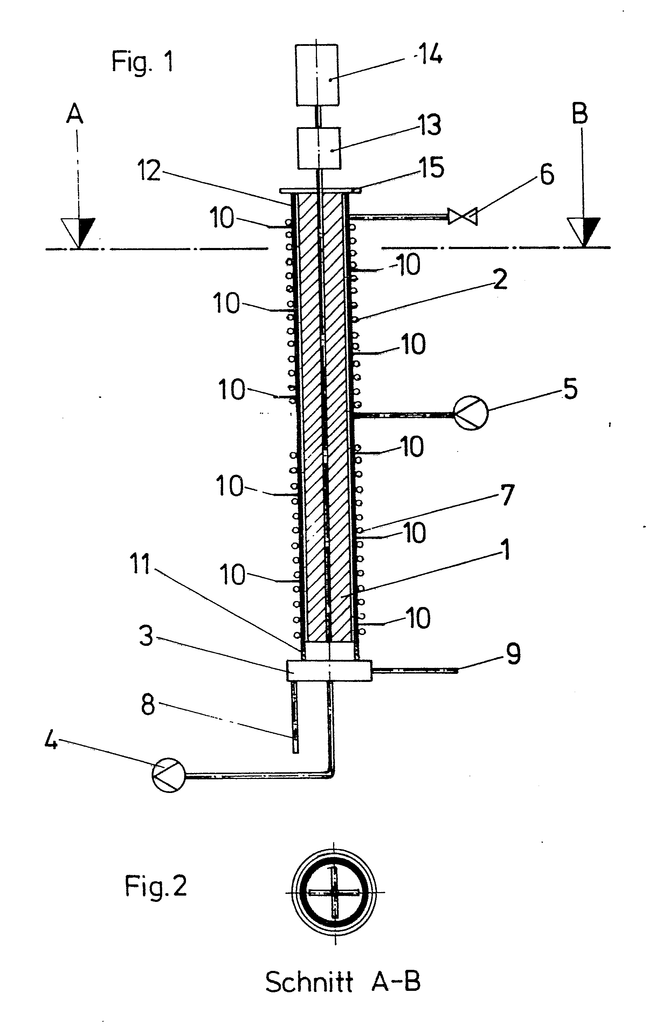

In den Zeichnungen sind Ausführungsbeispiele veranschaulicht. Figur 1 zeigt die Kristallisations-Trennvorrichtung in Frontansicht.

Hierin bedeuten:

(1) Drehflügel an zentraler Achse

(2) Kühlschlangen

(3) Bodenplatte, beheizbar

(4) Abnahmestutzen, mit Dosierpumpe

(5) Einspeisestutzen, mit Dosierpumpe

(6) Abnahmestutzen

(7) Heizschlangen

(8) Betriebsmittelzulauf

(9) Betriebsmittelablauf

(10) Temperaturmeßstutzen

(11) Glasring

(12) Kolonnenrohr

(13) Regelgetriebe

(14) Motor

(15) Abdeckplatte

Figur 2 zeigt die Kristallisations-Trennvorrichtung in Draufsicht.

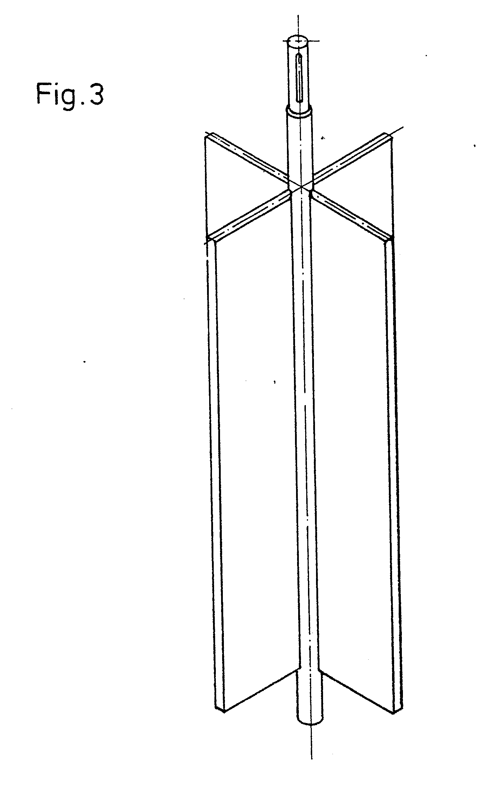

Figur 3 zeigt die Drehflügel als Beispiel für ein 4-Kammersystem.

Formular-Nr.: 1489-3

Vorstand: Dr. Herbert Asmis · Dr. Christian Bruhn · Hans-Jürgen Hamann
Dr. Heinz Hannse · Karl Otto Mittelstenscheid · Dr. Horst Witzel
Vorsitzender des Aufsichtsrats: Dr. Eduard v. Schwartzkoppen
Sitz der Gesellschaft: Berlin und Bergkamen
Handelsregister: AG Charlottenburg 93 HRB 283 u. AG Kamen HRB 0061

Postanschrift: SCHERING AG · D-1000 Berlin 65 · Postfach 65 03 11
Postscheck-Konto: Berlin-West 1175-101, Bankleitzahl 100 100 10
Berliner Commerzbank AG, Berlin, Konto-Nr. 108 7006 00, Bankleitzahl 100 400
Berliner Disconto-Bank AG, Berlin, Konto-Nr. 241/5008, Bankleitzahl 100 700 00
Berliner Handels-Gesellschaft — Frankfurter Bank —, Berlin,
Konto-Nr. 14-362, Bankleitzahl 100 202 00

SC3 GC IV 42

Gewerblicher Rechtsschutz

**0124747**

PATENTANSPRÜCHE

1. Kristallisations-Trennvorrichtung für Stoffgemische mit vertikaler Kristallisationskolonne, Kühl- und Heizaggregaten, Einspeise- und Abnahmestutzen, Pumpen, Ventilen, verbindenden Rohrleitungen und Antriebsmotor, dadurch gekennzeichnet, daß die Kristallisationskolonne aus einem zylindrischem Rohr besteht, in dem drehbar an einer zentralen Achse rechteckige Flügel angeordnet sind, die das Rohr in segmentförmige Kammern von jeweils gleicher Größe aufteilen.

2. Trennvorrichtung gemäß Anspruch 1, dadurch gekennzeichnet, daß das Rohr durch die Drehflügel in drei bis zwanzig Kammern, vorzugsweise 4 Kammern aufgeteilt wird.

3. Trennvorrichtung gemäß Anspruch 1, dadurch gekennzeichnet, daß die Flügel eine glatte Oberfläche aufweisen.

4. Trennvorrichtung gemäß Anspruch 1, dadurch gekennzeichnet, daß die Flügel mittels Federn in ebener Auflage fest an die Rohroberfläche gepresst werden.

5. Trennvorrichtung gemäß Anspruch 1, dadurch gekennzeichnet, daß die Flügel die Länge des Rohres aufweisen.

6. Trennvorrichtung gemäß Anspruch 1, dadurch gekennzeichnet, daß die Flügel an ihrer zur Rohrwand gerichteten Fläche spitzwinkling gestaltet sind.

7. Trennvorrichtung gemäß Anspruch 1, dadurch gekennzeichnet, daß das Verhältnis von Durchmesser zu Länge des Rohres von 1 : 1 bis 1 : 25, vorzugsweise 1 : 10, ist.

- 2 -

Formular-Nr.: 1489-8

Vorstand: Dr. Herbert Asmis · Dr. Christian Bruhn · Hans-Jürgen Hamann
Dr. Heinz Hannse · Karl Otto Mittelstenscheid · Dr. Horst Witzel
Vorsitzender des Aufsichtsrats: Dr. Eduard v. Schwartzkoppen
Sitz der Gesellschaft: Berlin und Bergkamen
Handelsregister: AG Charlottenburg 93 HRB 283 u. AG Kamen HRB 0061

Postanschrift: SCHERING AG · D-1000 Berlin 65 · Postfach 65 03 11
Postscheck-Konto: Berlin-West 1175-101, Bankleitzahl 100 100 10
Berliner Commerzbank AG, Berlin, Konto-Nr. 108 7006 00, Bankleitzahl 100 4
Berliner Disconto-Bank AG, Berlin, Konto-Nr. 241/5008, Bankleitzahl 100 700
Berliner Handels-Gesellschaft — Frankfurter Bank —, Berlin,
Konto-Nr. 14-362, Bankleitzahl 100 202 00

SC3 GC IV

SCHERING AG
Gewerblicher Rechtsschutz
0124747

8. Trennvorrichtung gemäß Anspruch 1, dadurch gekennzeichnet, daß sich am oberen Teil des Rohres Kühlschlangen und am unteren Teil des Rohres Heizschlangen befinden.

9. Trennvorrichtung gemäß Anspruch 1, dadurch gekennzeichnet, daß das Rohr aus korrosionsfestem Material, vorzugsweise Stahl, besteht.

10. Trennvorrichtung gemäß Anspruch 1, daß das Rohr am oberen und am unteren Ende mit Abdeckplatten versehen ist.

11. Trennvorrichtung gemäß Anspruch 1, dadurch gekennzeichnet, daß zwischen dem unteren Ende des Rohres und der unteren Abdeckplatte ein Glasring eingesetzt ist.

12. Trennvorrichtung gemäß Anspruch 1, dadurch gekennzeichnet, daß das am unteren Teil des Rohres befindliche Heizaggregat Leitbleche enthält, die stehend auf der Heizfläche angebracht sind.

13. Trennvorrichtung gemäß Anspruch 1, dadurch gekennzeichnet, daß die Kühl- und Heizaggregate mit einer Wärmepumpe verbunden sind.

14. Trennvorrichtung gemäß Anspruch 1, dadurch gekennzeichnet, daß der Einspeisestutzen im mittleren Teil des Rohres und die Abnahmestutzen jeweils im unteren Teil und im oberen Teil des Rohres angebracht sind.

Formular-Nr.: 1489-3

Vorstand: Dr. Herbert Asmis · Dr. Christian Bruhn · Hans-Jürgen Hamann
Dr. Heinz Hannse · Karl Otto Mittelstenscheid · Dr. Horst Witzel
Vorsitzender des Aufsichtsrats: Dr. Eduard v. Schwartzkoppen
Sitz der Gesellschaft: Berlin und Bergkamen
Handelsregister: AG Charlottenburg 93 HRB 283 u. AG Kamen HRB 0061

Postanschrift: SCHERING AG · D-1000 Berlin 65 · Postfach 65 03 11
Postscheck-Konto: Berlin-West 1175-101, Bankleitzahl 100 100 10
Berliner Commerzbank AG, Berlin, Konto-Nr. 108 7006 00, Bankleitzahl 100 400 0
Berliner Disconto-Bank AG, Berlin, Konto-Nr. 241/5008, Bankleitzahl 100 700 00
Berliner Handels-Gesellschaft — Frankfurter Bank —, Berlin,
Konto-Nr. 14-362, Bankleitzahl 100 202 00

SC3 GC IV 4255

15. Trennvorrichtung gemäß Anspruch 1, dadurch gekennzeichnet, daß über die Gesamtlänge des Rohres Temperaturmeßstellen verteilt sind.

16. Verfahren zur Trennung von Stoffgemischen in die Einzelkomponenten unter Verwendung der Kristallisations-Trennvorrichtung gemäß Ansprüchen 1 bis 15.

17. Verfahren gemäß Anspruch 16, dadurch gekennzeichnet, daß das Stoffgemisch in flüssiger Phase unter konstanter Rotation der Drehflügel in den mittleren Teil der Kolonne eingespeist wird, worauf die am gekühlten oberen Teil der Kolonne abgeschiedenen Kristalle mittels der rotierenden Drehflügel von der Kolonnenwand entfernt und in den von den Flügeln gebildeten Kammern solange im Gegenstromprinzip gegen das aus dem beheizten unteren Teil der Kolonne entgegenströmende flüssige Stoffgemisch geleitet werden, bis sich das Stoffgemisch durch Sedimentierung des Stoffs mit höherer Dichte in seine Komponenten getrennt hat, die dann jeweils am unteren oder oberen Ende der Kolonne entnommen werden.

18. Verfahren gemäß Anspruch 17, dadurch gekennzeichnet, daß der obere Teil der Kolonne auf eine Temperatur dicht unterhalb des Schmelzpunktes desjenigen Stoffes im Stoffgemisch eingestellt wird, der eine gegenüber dem begleitenden Stoff oder Stoffgemisch höhere Dichte aufweist.

- 4 -

Formular-Nr.: 1439-8

Vorstand: Dr. Herbert Asmis · Dr. Christian Bruhn · Hans-Jürgen Hamann
Dr. Heinz Hannse · Karl Otto Mittelstenscheid · Dr. Horst Witzel
Vorsitzender des Aufsichtsrats: Dr. Eduard v. Schwartzkoppen
Sitz der Gesellschaft: Berlin und Bergkamen
Handelsregister: AG Charlottenburg 93 HRB 283 u. AG Kamen HRB 0061

Postanschrift: SCHERING AG · D-1000 Berlin 65 · Postfach 65 03 11
Postscheck-Konto: Berlin-West 1175-101, Bankleitzahl 100 100 10
Berliner Commerzbank AG, Berlin, Konto-Nr. 108 7006 00, Bankleitzahl 100 400 0
Berliner Disconto-Bank AG, Berlin, Konto-Nr. 241/5008, Bankleitzahl 100 700 00
Berliner Handels-Gesellschaft — Frankfurter Bank —, Berlin,
Konto-Nr. 14-362, Bankleitzahl 100 202 00

SC3 GC IV 425

SCHERING AG
Gewerblicher Rechtsschutz
0124747

19. Verfahren gemäß Anspruch 17, dadurch gekennzeichnet, daß der untere Teil der Kolonne auf eine Temperatur oberhalb des Schmelzpunktes des Stoffes mit der höheren Dichte eingestellt wird.

20. Verfahren gemäß Anspruch 17, dadurch gekennzeichnet, daß die Kristalle auf ihrem Weg vom oberen zum unteren Teil der Kolonne eine Bahn durchlaufen, die der Kurve einer Hypocykloide entspricht.

21. Verfahren gemäß Anspruch 17, dadurch gekennzeichnet, daß das Verfahren kontinuierlich durchgeführt wird.

22. Verfahren gemäß Anspruch 17, dadurch gekennzeichnet, daß, sofern es sich um die Trennung von Drei- oder Mehrstoffmischungen handelt, die Behandlung in nachgeschalteten analogen Vorrichtungen wiederholt wird.

Formular-Nr.: 1439-8

Vorstand: Dr. Herbert Asmis · Dr. Christian Bruhn · Hans-Jürgen Hamann
Dr. Heinz Hannse · Karl Otto Mittelstenscheid · Dr. Horst Witzel
Vorsitzender des Aufsichtsrats. Dr. Eduard v. Schwartzkoppen
Sitz der Gesellschaft · Berlin und Bergkamen
Handelsregister: AG Charlottenburg 93 HRB 283 u. AG Kamen HRB 0061

Postanschrift: SCHERING AG · D-1000 Berlin 65 · Postfach 65 03 11
Postscheck-Konto: Berlin-West 1175-101, Bankleitzahl 100 100 10
Berliner Commerzbank AG, Berlin, Konto-Nr. 108 7006 00, Bankleitzahl 100 400 00
Berliner Disconto-Bank AG, Berlin, Konto-Nr. 241/5008 Bankleitzahl 100 700 00
Berliner Handels-Gesellschaft — Frankfurter Bank —, Berlin,
Konto-Nr. 14-362, Bankleitzahl 100 202 00

SC3 GC IV 4259

Fig. 1

Fig. 2

Schnitt A-B

Fig.3